# EUROPÄISCHE PATENTSCHRIFT

(11) **EP 3 769 171 B1**
(45) Veröffentlichungstag und Bekanntmachung des Hinweises auf die Patenterteilung: **29.06.2022**
(21) Anmeldenummer: 19711563.7
(22) Anmeldetag: 14.03.2019
(51) Int. Cl.: G05B 23/02

(54) **VERFAHREN ZUR DIAGNOSE EINER FUNKTIONALITÄT BASIEREND AUF EINEM SUMMENSIGNAL MEHRERER FEHLERZÄHLER**
METHOD FOR DIAGNOSING A FUNCTIONALITY BASED ON A SUM SIGNAL OF A PLURALITY OF FAILURE COUNTERS
PROCÉDÉ DE DIAGNOSTIC D`UNE FONCTIONNALITÉ BASÉ SUR UN SIGNAL D`ADDITION DE PLUSIEURS COMPTEURS D`ERREURS

(30) Priorität: 22.03.2018 DE 102018106871
(43) Veröffentlichungstag der Anmeldung: 27.01.2021
(73) Patentinhaber: thyssenkrupp Presta AG, 9492 Eschen (LI)
(72) Erfinder: TIBORI, Tamás Tibold, 1113 Budapest (HU)
(74) Vertreter: thyssenkrupp Intellectual Property GmbH
(86) Internationale Anmeldenummer: PCT/EP2019/056368
(87) Internationale Veröffentlichungsnummer: WO 2019/179860

(56) Entgegenhaltungen:
- EP-A2- 0 708 233
- DE-A1-102006 028 695
- US-B2- 8 898 364

## Beschreibung

Die vorliegende Erfindung betrifft ein Verfahren zur Diagnose einer Funktionalität mit den Merkmalen des Anspruchs 1, eine Sicherheitsschalteinrichtung für einen Motor mit einer Diagnosefunktionalität, die dazu eingerichtet ist das Verfahren durchzuführen, sowie einer elektromechanische Kraftfahrzeuglenkung und einem Steer-by-Wire-Lenksystem für ein Kraftfahrzeug mit einem Servomotor, der eine solche Sicherheitsschalteinrichtung aufweist.

In sicherheitsrelevanten Applikationen sowie Software-Implementierungen von Diagnosefunktionen im Automobilbereich können Fehler während des Fahrzeugbetriebs auftreten. Es sind daher Maßnahmen zur Fehlererkennung und zur geeigneten Reaktion auf erkannte Fehler notwendig. Bei in Kraftfahrzeuglenkungen eingesetzten Elektromotoren ist die für das Erkennen eines Fehlers vorgesehene Zeitspanne herkömmlicherweise sehr kurz. Ein Abschalten eines fehlerbehafteten Elektromotors erfolgt daher auch bei einem Vorliegen von instabilen Signalen, die gar keinen kritischen Fehler aufweisen. Dieses Verhalten ist unerwünscht.

Aus DE 10 2006 028 695 A1 ist ein elektronisches Steuersystem mit Fehlfunktionsüberwachung für ein Fahrzeug bekannt, das eine Steuerungsüberwachung, die die Fehlfunktion in einer Stellgliedsteuerung überwacht, und ein Überwachungsmodul umfasst, dass eine Fehlfunktion in der Steuerungsüberwachung basierend auf einem Vergleich zwischen einem berechneten und einem erwarteten Wert überwacht. Das Überwachungsmodul weist einen Datenfehlerzähler und einen Kommunikationsfehlerzähler, sowie einen zweiten und dritten Komparator auf, die die Zählwerte der Fehlerzähler mit einem Referenzwert aus einem Speicher vergleichen. Die Ausgänge der Komparatoren werden einem ODER-Schaltkreis eingegeben.

EP 0 708 233 A2 beschreibt ein Verfahren zur Steuerung einer Brennkraftmaschine. Eine erste Steuereinheit gibt abhängig von ersten Größen eine Kraftstoffmengengröße vor. Eine zweite Steuereinheit bestimmt ausgehend von der Kraftstoffmengengröße und weiteren Größen eine Stellgröße für ein Stellglied und meldet diese an die erste Steuereinheit zurück. Die erste Steuereinheit vergleicht die Stellgröße und die Kraftstoffmengengröße miteinander auf Fehler. Erkennt die Fehlererkennung, dass die beiden Signale nicht plausibel zueinander sind, so wird ein erster Fehlerzähler erhöht. Desweiteren vergleicht die Fehlererkennung gemessene Drehzahlen der Kurbel- und der Nockenwelle miteinander. Im Falle einer Abweichung wird ein zweiter Fehlerzähler erhöht. Überschreitet einer der beiden Fehlerzähler einen Schwellwert wird die Einspritzung unterbrochen.

US 8 898 364 B2 beschreibt ein internes Bus-System, bei dem mehrere BusTeilnehmer in Reihe an einen Bus-Koppler angeschlossen sind. Jeder Busteilnehmer ist in der Lage, dezentral und vorzugsweise autark die Kommunikationsqualität des Bus-Systems zu überwachen und auf Basis von vom Bus-Koppler empfangenen internen Steuerinformationen und/oder von von den direkt benachbarten Busteilnehmern empfangenen Steuerinformationen Aktionen einzuleiten. Erkennt ein Busteilnehmer eine relative Häufung von Fehlern bezüglich einer der überwachten Schnittstellen, so kann er zu einem beliebigen Zeitpunkt eine entsprechende Fehlerinformation in ein empfangenes Datentelegramm schreiben und über das Bus-System an den Bus-Koppler zurücksenden.

Es ist Aufgabe der vorliegenden Erfindung, ein verbessertes und vor allem stabiles Verfahren zur Diagnose einer Funktionalität mit diskreten Werten oder diskreten Klassen von Werten auf der Eingangs- oder Ausgangsseite anzugeben.

Diese Aufgabe wird von einem Verfahren zur Diagnose einer Funktionalität mit den Merkmalen des Anspruchs 1, einer Sicherheitsschalteinrichtung für einen Motor mit einer Diagnosefunktionalität, die dazu eingerichtet ist das Verfahren durchzuführen, sowie einer elektromechanische Kraftfahrzeuglenkung und einem Steer-by-Wire-Lenksystem für ein Kraftfahrzeug mit einem Servomotor, der eine solche Sicherheitsschalteinrichtung aufweist, gelöst. In den Unteransprüchen sind vorteilhafte Weiterbildungen der Erfindung genannt. Demnach ist ein Verfahren zur Diagnose einer Funktionalität, die ein Eingangs- oder Ausgangssignal mit diskreten Werten oder diskreten Klassen von Werten aufweist, die beobachtbare Größen einer Diagnosefunktionalität sind, vorgesehen, wobei das zu diagnostizierende Signal das Ausgangssignal ist, und wobei die Werte oder die Klassen von Werten eine Kardinalität N aufweisen, und N Fehlerzähler vorgesehen sind. Das Verfahren umfasst folgende Schritte:
- Bereitstellen eines Summensignals aus der Summe der Signale der Fehlerzähler;
- Falls ein Wert oder eine Klasse an Werten fehlerhaft ist, Erhöhung des Signals des dem fehlerhaften Wert oder der fehlerhaften Klasse zugeordneten Fehlerzählers;
- Falls der Wert oder die Klasse korrekt ist, Heruntersetzen des Signals des dem Wert oder der Klasse zugeordneten Fehlerzählers;
- Falls das Summensignal einen vorgegeben Grenzwert überschreitet, Ausgeben einer Fehlermeldung der Funktionalität.

Das Verfahren verleiht der Funktionalität die Fähigkeit, ein instabiles Eingangs- oder Ausgangssignal zu managen. Die Fehlererkennung ist stabil gegenüber transienten Fehlern. Eine Stabilität der Funktionalität wird dadurch erreicht, dass eine gewisse Anzahl an fehlerhaften Werten des relevanten Signals oder der Klassen zugelassen wird, bevor die Funktionalität als fehlerhaft angesehen wird.

Die Fehlerdetektionszeit von konsequent falschen Werten oder Klassen von Werten ist dabei äquivalent zu der Fehlerdetektionszeit einer trivialen Diagnoseanwendung, deren Kardinalität 1 ist, mit einer Fehlererkennung, die auf dem Vorliegen eines einzelnen Fehlers basiert.

Vorzugsweise stimmt die Verteilung der Eingangswerte oder Eingangsklassen nicht mit der Verteilung der Werte des Ausgangssignals oder der Ausgangsklassen überein.

Die Klassen sind so definiert, dass in einer Klasse Eingangswerte oder Ausgangswerte gruppiert werden, auf die eine Funktion der Funktionalität gleich wirkt.

Vorzugsweise erfolgt das Erhöhen und/oder das Heruntersetzen des Signals des Fehlerzählers zeitlich kontinuierlich, insbesondere linear.

Es kann aber auch vorgesehen sein, dass das Signals des Fehlerzählers bei vorliegen eines korrekten Wertes unmittelbar auf Null gesetzt wird.

Die Anzahl der Werte oder Klassen an Werten ist bevorzugt gering, insbesondere ist die Kardinalität kleiner als 4.

In einer bevorzugten Ausführungsform umfasst die Funktionalität eine Sicherheitsschalteinrichtung eines Motors, wobei vorzugsweise das zu diagnostizierende Signal das Ausgangssignal der Sicherheitsschalteinrichtung ist.

Vorteilhafterweise überprüft die Sicherheitsschalteinrichtung eine Winkelgeschwindigkeit des Motors und verhindert, dass ein Schaltelement in einem Regelkreis des Motors bei einer Winkelgeschwindigkeit oberhalb eines zulässigen Grenzwertes öffnet oder bei einer Winkelgeschwindigkeit unterhalb eines zulässigen Grenzwertes schließt. Dabei ist die Kardinalität bevorzugt zwei und der Wert gibt ein Überschreiten oder ein Unterschreiten des zulässigen Grenzwertes wieder. Falls die Wahrscheinlichkeitsdichtefunktion der Eingangswerte positive über den gesamten Wertebereich ist, hat ein systematischer Fehler eine begrenzte Wahrscheinlichkeit detektiert zu werden, auch wenn der Fehler nur bei seltenen Kombinationen von Eingangswerten auftritt.

Es können folgende weitere Schritte vorgesehen sein:
- Messen der Winkelgeschwindigkeit und Überprüfen des Wertes des Ausgangssignals der Sicherheitsschalteinrichtung;
- Falls der Wert des Ausgangssignals fehlerhaft ist, Erhöhen des Signals des dem fehlerhaften Wert zugeordneten Fehlerzählers;
- Falls der Wert korrekt ist, Heruntersetzen des Signals des dem Wert zugeordneten Fehlerzählers;

Das Schaltelement ist vorzugsweise ein Relais oder ein MOSFET. Es kann Teil eines oder mehrere Inverter sein und/oder von einem oder mehreren Steuergeräten betrieben werden.

Es ist bevorzugt, dass in dem Regelkreis des Motors ein Hauptkontroller und ein zusätzlicher Mikrokontroller vorgesehen sind, die unabhängig voneinander die Winkelgeschwindigkeit messen, wobei insbesondere der Hauptkontroller den zusätzlichen Mikrokontroller als Teil der Sicherheitsschalteinrichtung überprüft.

Es ist zudem eine Sicherheitsschalteinrichtung für einen Motor mit einer Diagnosefunktionalität vorgesehen, wobei die Diagnosefunktionalität dazu eingerichtet ist, das zuvor beschriebene Verfahren durchzuführen.

Weiterhin ist eine elektromechanische Kraftfahrzeuglenkung und ein Steer-by-Wire-Lenksystem für ein Kraftfahrzeug mit einem Servomotor aufweisend eine solche Sicherheitsschalteinrichtung vorgesehen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung einer elektromechanischen Kraftfahrzeugservolenkung, sowie
- Fig. 2:: eine Darstellung eines zeitlichen Verlaufs einer Winkelgeschwindigkeit eines Motors der elektromechanischen Kraftfahrzeugservolenkung mit erfindungsgemäßer Fehlererkennung einer Sicherheitsschalteinrichtung.

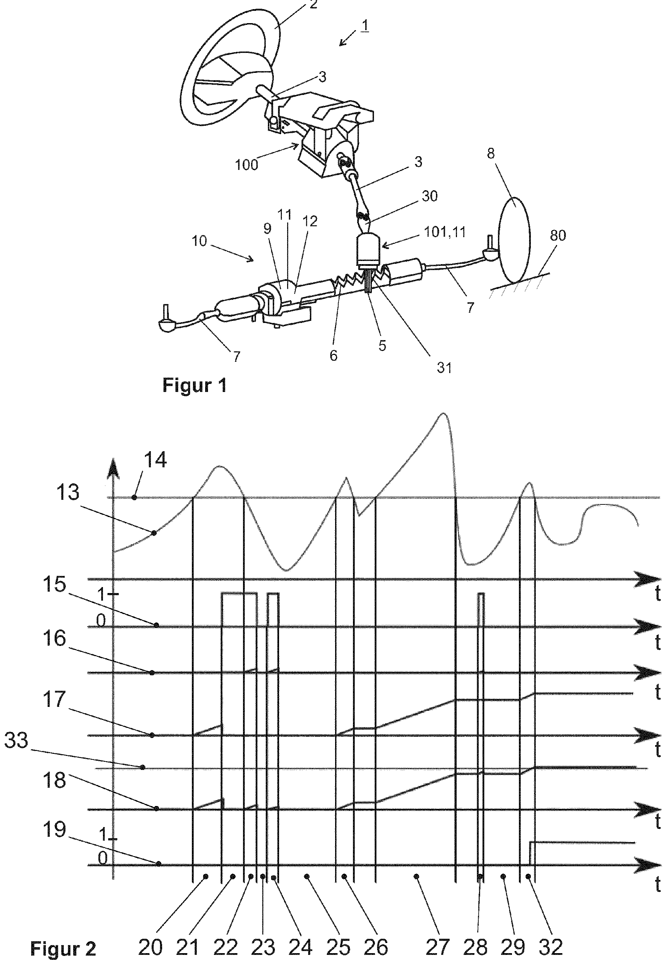

In der Figur 1 ist eine elektromechanische Kraftfahrzeugservolenkung 1 mit einem Lenkrad 2, das mit einer oberen Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen.

Die obere Lenkwelle 3 und die untere Lenkwelle 4 sind dreheleastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. In Abhängigkeit des von der Drehmomentsensoreinheit 11 gemessen Drehmoments 111 stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt. Die Servoeinheit 10 weist zur Berechnung der Lenkunterstützung eine elektronische Steuereinheit 12 auf. Der Elektromotor 9 verfügt über eine Anzahl an Phasenwindungen. Die Phasenwindungen des Elektromotors werden von der Steuereinheit 12 angesteuert. Den Phasenwindungen ist jeweils mindestens ein Schaltelement zugeordnet. Als Schaltelement ist bevorzugt ein elektronischer Schalter, üblicherweise ein elektronischer Schalter aus einem Halbleitermaterial, vorgesehen. Die Wahl eines geeigneten HalbleiterBauelements ergibt sich durch das erwünschte Schaltverhalten. Als Halbleiterbauelemente werden vorzugsweise MOSFET verwendet, bei höheren Spannungen von > 50 V können aber auch andere Bauelemente, wie bspw. IBGT, verwendet werden. In dem Regelkreis wird die Ansteuerung des Elektromotors 9 anhand der gemessenen Winkelgeschwindigkeit geregelt. Die Winkelgeschwindigkeit kann z. B. durch einen RPS-Sensor gemessen werden.

Es ist eine Sicherheitsschalteinrichtung vorgesehen, die die Winkelgeschwindigkeit des Motors überprüft, und verhindert, dass ein Schaltelement in dem Regelkreis bei zu hoher Winkelgeschwindigkeit öffnet und somit Schaden nimmt. Außerdem ist eine Diagnosefunktionalität zum Erkennen eines Funktionsfehlers der Sicherheitsschalteinrichtung vorgesehen. Die Sicherheitsschalteinrichtung ist dazu ausgebildet, das Schaltelement nicht zu öffnen, wenn die Diagnosefunktionalität einen Funktionsfehler erkennt.

Ein zusätzlicher Mikrocontroller ist in dem Regelkreis des Schaltelementes integriert, der die Winkelgeschwindigkeit des Motors unabhängig von einem Hauptkontroller misst und eine Anfrage zum Öffnen des Schaltelementes verzögert, bis ein sicheres Öffnen des Schaltelementes durchgeführt werden kann. Der zusätzliche Mikrocontroller wird im Rahmen der Diagnosefunktionalität von dem Hauptcontroller überwacht. Der Hauptcontroller misst die Winkelgeschwindigkeit des Motors und erhält eine 1Bit-Information des zusätzlichen Mikrokontrollers darüber, ob die Winkelgeschwindigkeit des Motors oberhalb oder unterhalb eines Grenzwertes zum sicheren Öffnen des Schaltelementes liegt. Dabei ist es wünschenswert, dass die Funktionalität möglichst stabil ist, d. h. das nur latente Fehler erkannt werden. Für diesen Fall, in dem der Ausgangwert des zusätzlichen Mikrokontrollers eine geringe Kardinalität mit nur zwei Werten "oberhalb" und "unterhalb" aufweist und der Zustand im Normalfall "unterhalb" ist, ist es besonders wichtig alle fehlerbehafteten "unterhalb" Werte in der Diagnosefunktionalität zu berücksichtigen.

Die Diagnosefunktionalität ist dazu ausgebildet, das Signal zu "entprellen". Das heißt, ein instabiles und somit fehlerbehaftetes Signal des zusätzlichen Mikrocontrollers wird zwar detektiert, es führt aber erst zur Detektion eines Fehlers in der Sicherheitsschalteinrichtung, wenn eine gewisse Anzahl an Fehlern vorliegen oder ein systematischer Fehler auftritt.

In der Figur 2 sind beispielhaft zeitliche Signalverläufe für eine Sicherheitsschalteinrichtung mit Diagnosefunktionalität dargestellt. Bei dem Schaltelement kann es sich um ein Relais oder MOSFET handeln, die von einem oder mehreren Steuergeräten betrieben werden. Das Schaltelement ist Teil eines oder mehrerer Inverter. Die Figur 2 zeigt, von oben nach unten gesehen, in einer ersten Zeile die Ist-Winkelgeschwindigkeit 13 des Motors 9 aufgetragen gegen die Zeit. Ein zulässiger Grenzwert zum Öffnen des Schaltelements ist als Schwellenwert 14 eingezeichnet. In der zweiten Zeile ist das Ausgangssignal des zusätzlichen Mikrokontrollers 15 dargestellt. Der Mikrokontroller gibt die Werte 1 und Null aus, wobei der Wert gleich 1 ist, wenn die Winkelgeschwindigkeit den zulässigen Grenzwert überschreitet. Das Ausgangssignal des zusätzlichen Mikrokontrollers wird im Rahmen der Diagnosefunktionalität überprüft. Es sind zwei Fehlerzähler vorgesehen, deren Signal 16,17 in den Zeilen drei und vier dargestellt ist. Da der Hauptkontroller unabhängig von dem zusätzlichen Mikrokontroller die Winkelgeschwindigkeit misst, erkennt der erste Fehlerzähler einen falsch ausgegebenen Wert des Mikrokontrollers, wenn die Winkelgeschwindigkeit unterhalb des Grenzwertes 14 liegt und der zusätzliche Mikrokontroller den Wert 1 ausgibt. Der zweite Fehlerzähler detektiert hingegen einen falsch ausgegebenen Wert des Mikrokontrollers, wenn die Winkelgeschwindigkeit oberhalb des Grenzwertes 14 liegt und der Mikrokontroller den Wert Null ausgibt. Im Fall einer Fehlerdetektion der Fehlerzähler werden diese kontinuierlich erhöht. Gibt der Mikrokontroller wieder korrekte Werte aus, werden die Fehlerzähler auf Null zurückgesetzt. Die sechste Zeile zeigt die Summe der Ausgangssignale 18 der Signale der Fehlerzähler 16,17. In der letzten Zeile ist das Ausgangssignal der Diagnosefunktionalität 19 dargestellt. Das Ausgangssignal ist null wenn kein Fehler vorliegt und eins wenn ein Fehler detektiert wurde. Erst wenn ein Fehler detektiert wird, ist die Sicherheitsschalteinrichtung fehlerbehaftet und das Schaltelement öffnet nicht mehr.

Im Folgenden wird der in Figur 2 gezeigte zeitliche Verlauf der Winkelgeschwindigkeit und die Reaktionen der Sicherheitsschalteinrichtung mit Diagnosefunktionalität beschrieben.

Die Winkelgeschwindigkeit steigt in einem ersten Bereich 20 bis über den zulässigen Grenzwert 14 an. Der zusätzliche Mikroprozessor erkennt das Überschreiten des Grenzwertes 14 nicht und erachtet das Signal der Winkelgeschwindigkeit als zulässig. Die Diagnosefunktionalität erkennt den Fehler des zusätzlichen Mikroprozessors und der zweite Fehlerzähler wird erhöht. Das Vorliegen eines Fehlers wird jedoch nicht detektiert und das Summensignal der Diagnosefunktionalität bleibt Null.

Die Winkelgeschwindigkeit bleibt in einem zweiten Bereich 21 des zeitlichen Verlaufs über dem zulässigen Grenzwert 14. Der Mikrokontroller erkennt das Überschreiten und gibt korrekter Weise den Wert 1 aus. Der zweite Fehlerzähler wird daher auf Null zurückgesetzt. Im weiteren Verlauf in einem dritten Bereich 22 sinkt die Winkelgeschwindigkeit unterhalb des Grenzwertes. Der zusätzliche Mikroprozessor erkennt die Änderung nicht und gibt fälschlicherweise weiterhin den Wert 1 aus. Der erste Fehlerzähler wird daher erhöht. Nachdem der Mikroprozessor wieder den korrekten Wert ausgibt (Bereich 23), wird der erste Fehlerzähler auf Null zurückgesetzt. Im Folgenden tritt ein transienter Fehler des zusätzlichen Mikroprozessors in einem weiteren Bereich 24 auf, der von dem ersten Fehlerzähler detektiert wird. Danach wird der erste Fehlerzähler wieder auf Null zurückgesetzt (Bereich 25). Nach einiger Zeit weist der zusätzliche Mikroprozessor einen permanenten Fehler auf; er zeigt das Vorliegen einer zu hohen Winkelgeschwindigkeit nicht mehr an. Dies wird von der Diagnosefunktionalität erst erkannt, als die Winkelgeschwindigkeit den zulässigen Grenzwert 14 überschreitet. In diesem Fall wird der zweite Fehlerzähler erhöht (Bereich 26). Da der Mikroprozessor gar kein richtiges Ausgangssignal mehr beim Überschreiten des zulässigen Grenzwertes ausgibt, wird das Signal des zweiten Fehlerzählers nicht mehr auf Null zurückgesetzt und in der Zeit wenn die Winkelgeschwindigkeit den zulässigen Grenzwert überschreitet, immer weiter erhöht (Bereiche 27,32). Zum Ende des zeitlichen Verlaufs hin tritt ein kurzer transienter Fehler in dem Ausgangssignal des Mikroprozessors auf (Bereich 28). Dieser wird von dem ersten Fehlerzähler erkannt, dessen Signal entsprechend erhöht wird. Nachdem der Mikroprozessors diesen Fehler nicht mehr zeigt (Bereich 29), wird der erste Fehlerzähler auf Null zurückgesetzt. Nach einiger Zeit wird ein vorgegebener Grenzwert im Summensignal der Fehlerzähler, auch Entprelllimit 33 genannt (engl. debounce limit) überschritten, was die Detektion eines Fehlers der Sicherheitsschalteinrichtung triggert und ein Öffnen des Schaltelements aus Sicherheitsgründen verhindert.

Das Hochsetzen der Fehlerzähler erfolgt kontinuierlich bei Vorliegen eines entsprechenden Fehlers. Vorzugsweise nimmt das Signal der Fehlerzähler linear mit der Zeit zu.

Die Erfindung ist nicht auf elektromechanische Lenkungen begrenzt. Es kann beispielsweises auch der Einsatz in Elektromotoren von Steer-by-Wire Lenkungen vorgesehen sein.

## Patentansprüche

1. Verfahren zur Diagnose eines Signals einer Funktionalität, die ein Eingangs- oder Ausgangssignal mit diskreten Werten oder diskreten Klassen von Werten, in denen Eingangswerte oder Ausgangswerte gruppiert werden, auf die eine Funktion der Funktionalität gleich wirkt, aufweist, die zur Fehlererkennung beobachtbare Größen einer Diagnosefunktionalität sind, wobei das zu diagnostizierende Signal das Ausgangssignal ist, die diskreten Werte oder entsprechend die diskreten Klassen von Werten eine Kardinalität N aufweisen, die der Anzahl der diskreten Werte oder diskreten Klassen an Werten entspricht, N Fehlerzähler vorgesehen sind, und das Verfahren folgende Schritte umfasst:
• Bereitstellen eines Summensignals (18) aus der Summe der 2. Werte der Fehlerzähler (16,17);
• Falls ein Wert oder eine Klasse an Werten fehlerhaft ist, Erhöhung des Wertes des dem fehlerhaften Wert oder der fehlerhaften Klasse zugeordneten Fehlerzählers (16,17);
• Falls der Wert oder die Klasse korrekt ist, Heruntersetzen des Wertes des dem Wert oder der Klasse zugeordneten Fehlerzählers (16,17);
• Falls das Summensignal (18) einen vorgegebenen Grenzwert (33) überschreitet, Ausgeben einer Fehlermeldung der Funktionalität.

2. Verfahren nach Anspruch 1, **dadurch gekennzeichnet, dass** das Erhöhen und/oder das Heruntersetzen des Signals des Fehlerzählers (16,17) zeitlich kontinuierlich erfolgt.

3. Verfahren nach Anspruch 2, **dadurch gekennzeichnet, dass** das Erhöhen und/oder das Heruntersetzen des Signals des Fehlerzählers (16,17) linear erfolgt.

4. Verfahren nach Anspruch 2 oder 3, **dadurch gekennzeichnet, dass** das Heruntersetzen des Signals des Fehlerzählers (16,17) unmittelbar auf Null erfolgt.

5. Verfahren nach einem der vorhergehenden Ansprüche, **dadurch gekennzeichnet, dass** die Funktionalität eine Sicherheitsschalteinrichtung eines Motors (9) umfasst.

6. Verfahren nach Anspruch 5, **dadurch gekennzeichnet, dass** das zu diagnostizierende Signal das Ausgangssignal der Sicherheitsschalteinrichtung ist.

7. Verfahren nach Anspruch 5 oder 6, **dadurch gekennzeichnet, dass** die Sicherheitsschalteinrichtung eine Winkelgeschwindigkeit des Motors (9) überprüft, und verhindert, dass ein Schaltelement in einem Regelkreis des Motors (9) bei einer Winkelgeschwindigkeit, die den zulässigen Grenzwert (14) überschreitet, schaltet.

8. Verfahren nach einem der Ansprüche 6 bis 7, **dadurch gekennzeichnet, dass** die Kardinalität mindestens zwei ist und der Wert ein Überschreiten des zulässigen Grenzwertes (14) wiedergibt.

9. Verfahren nach einem der Ansprüche 6 bis 8, **dadurch gekennzeichnet, dass** folgende weitere Schritte vorgesehen sind:
• Messen der Winkelgeschwindigkeit (13) und Überprüfen des Wertes des Ausgangssignals der Sicherheitsschalteinrichtung;
• Falls der Wert des Ausgangssignals fehlerhaft ist, Erhöhen des Signals des dem fehlerhaften Wert zugeordneten Fehlerzählers (16,17);
• Falls der Wert korrekt ist, Heruntersetzen des Signals des dem Wert zugeordneten Fehlerzählers (16,17);

10. Verfahren nach einem der Ansprüche 6 bis 9, **dadurch gekennzeichnet, dass** das Schaltelement ein Relais oder MOSFET ist.

11. Verfahren nach einem der Ansprüche 6 bis 10, **dadurch gekennzeichnet, dass** das Schaltelement Teil eines oder mehrerer Inverter ist.

12. Verfahren nach einem der Ansprüche 6 bis 11, **dadurch gekennzeichnet, dass** das Schaltelement von einem oder mehreren Steuergeräten betrieben wird.

13. Verfahren nach einem der Ansprüche 6 bis 12, **dadurch gekennzeichnet, dass** in dem Regelkreis des Motors ein Hauptkontroller und ein zusätzlicher Mikrokontroller vorgesehen sind, die unabhängig voneinander die Winkelgeschwindigkeit messen.

14. Sicherheitsschalteinrichtung für einen Motor (9) mit einer Diagnosefunktionalität, die dazu eingerichtet ist, das Verfahren nach einem der Ansprüche 1 bis 13 durchzuführen.

15. Elektromechanische Kraftfahrzeuglenkung mit einem Servomotor aufweisend eine Sicherheitsschalteinrichtung nach Anspruch 14.

16. Steer-by-Wire-Lenksystem für ein Kraftfahrzeug mit einem Servomotor aufweisend eine Sicherheitsschalteinrichtung nach Anspruch 14.

## Claims

1. A method for diagnosing a signal of a functionality which has an input or output signal
with discrete values or
discrete classes of values, in which input values or output values are grouped, on which a function of the functionality has the same effect,
which are observable quantities of a diagnosis functionality for error detection,
wherein the signal to be diagnosed is the output signal, the discrete values or, respectively, the discrete classes of values have a cardinality N that is the number of discrete values or discrete classes of values, N error counters are provided, and the method has the following steps:
• providing a sum signal (18) from the sum of the values of the error counters (16, 17);
• if a value or class of values is erroneous, incrementing the value of the error counter (16, 17) assigned to the erroneous value or the erroneous class;
• if the value or the class is correct, decrementing the value of the error counter (16, 17) assigned to the value or the class;
• if the sum signal (18) exceeds a pre-established limit value (33), outputting an error message of the functionality.

2. The method as claimed in claim 1, **characterized in that** the incrementing and/or decrementing of the signal of the error counter (16, 17) takes place continuously over time.

3. The method as claimed in claim 2, **characterized in that** the incrementing and/or decrementing of the signal of the error counter (16, 17) takes place linearly.

4. The method as claimed in claim 2 or 3, **characterized in that** the signal of the error counter (16, 17) is decremented directly to zero.

5. The method as claimed in one of the preceding claims, **characterized in that** the functionality comprises a safety switching device of a motor (9).

6. The method as claimed in claim 5, **characterized in that** the signal to be diagnosed (13) is the output signal of the safety switching device.

7. The method as claimed in claim 5 or 6, **characterized in that** the safety switching device inspects an angular velocity of the motor (9) and prevents a switching element in a control loop of the motor (9) from switching at an angular velocity which exceeds the permissible limit value (14).

8. The method as claimed in one of the claims 6 to7, **characterized in that** the cardinality is at least two and the value reproduces an exceeding of the permissible limit value (14).

9. The method as claimed in one of the claims 6 to 8, **characterized in that** the following further steps are provided:
• measuring the angular velocity (13) and inspecting the value of the output signal of the safety switching device;
• if the value of the output signal is erroneous, incrementing the signal of the error counter (16, 17) assigned to the erroneous value;
• if the value is correct, decrementing the signal of the error counter (16, 17) assigned to the value.

10. The method as claimed in one of the claims 6 to 9, **characterized in that** the switching element is a relay or MOSFET.

11. The method as claimed in one of the claims 6 to 10, **characterized in that** the switching element is part of one or more inverters.

12. The method as claimed in one of the claims 6 to 11, **characterized in that** the switching element is operated by one or more control devices.

13. The method as claimed in one of the claims 6 to 12, **characterized in that** a main controller and an additional microcontroller which measure the angular velocity independently of each other are provided in the control loop of the motor.

14. A safety switching device for a motor (9) with a diagnosis functionality which is set up to carry out the method as claimed in one of claims 1 to 13.

15. An electromechanical motor vehicle steering system with a servo motor having a safety switching device according to claim 14.

16. A steer-by-wire steering system for a motor vehicle with a servo motor having a safety switching device according to claim 14.

## Revendications

1. Procédé pour diagnostiquer un signal d'une fonctionnalité, qui possède un signal d'entrée ou de sortie avec des valeurs discrètes ou des classes discrètes de valeurs dans lesquelles sont groupées des valeurs d'entrée ou des valeurs de sortie, sur lesquelles une fonction de la fonctionnalité agit de la même manière, qui sont des grandeurs d'une fonctionnalité de diagnostic observables pour la reconnaissance de défaut, le signal à diagnostiquer étant le signal de sortie, les valeurs discrètes ou, par conséquent, les classes discrètes de valeurs possédant une cardinalité N qui correspond au nombre de valeurs discrètes ou de classes discrètes de valeurs, N compteurs de défauts étant prévus, et le procédé comprenant les étapes suivantes :
• fourniture d'un signal de somme (18) composé de la somme des valeurs des compteurs de défauts (16, 17) ;
• dans le cas où une valeur ou une classe de valeurs est incorrecte, augmentation de la valeur du compteur de défauts (16, 17) associé à la valeur incorrecte ou la classe incorrecte ;
• dans le cas où la valeur ou la classe est correcte, diminution de la valeur du compteur de défauts (16, 17) associé à la valeur ou la classe ;
• dans le cas où le signal de somme (18) dépasse une valeur limite (33) prédéfinie, délivrance d'un message d'erreur de la fonctionnalité.

2. Procédé selon la revendication 1, **caractérisé en ce que** l'augmentation et/ou la diminution du signal du compteur de défauts (16, 17) s'effectuent continuellement dans le temps.

3. Procédé selon la revendication 2, **caractérisé en ce que** l'augmentation et/ou la diminution du signal du compteur de défauts (16, 17) s'effectuent linéairement.

4. Procédé selon la revendication 2 ou 3, **caractérisé en ce que** la diminution du signal du compteur de défauts (16, 17) s'effectue directement à zéro.

5. Procédé selon l'une des revendications précédentes, **caractérisé en ce que** la fonctionnalité comprend un dispositif de commutation de sécurité d'un moteur (9).

6. Procédé selon la revendication 5, **caractérisé en ce que** le signal à diagnostiquer est le signal de sortie du dispositif de commutation de sécurité.

7. Procédé selon la revendication 5 ou 6, **caractérisé en ce que** le dispositif de commutation de sécurité contrôle une vitesse angulaire du moteur (9) et empêche qu'un élément de commutation dans un circuit de régulation du moteur (9) ne commute lors d'une vitesse angulaire qui dépasse la valeur limite (14) admissible.

8. Procédé selon l'une des revendications 6 et 7, **caractérisé en ce que** la cardinalité est au moins de deux et la valeur reproduit un dépassement de la valeur limite (14) admissible.

9. Procédé selon l'une des revendications 6 à 8, **caractérisé en ce que** les étapes supplémentaires suivantes sont prévues :
• mesure de la vitesse angulaire (13) et vérification de la valeur du signal de sortie du dispositif de commutation de sécurité ;
• dans le cas où la valeur du signal de sortie est incorrecte, augmentation du signal du compteur de défauts (16, 17) associé à la valeur incorrecte ;
• dans le cas où la valeur est correcte, diminution du signal du compteur de défauts (16, 17) associé à la valeur.

10. Procédé selon l'une des revendications 6 à 9, **caractérisé en ce que** l'élément de commutation est un relais ou un MOSFET.

11. Procédé selon l'une des revendications 6 à 10, **caractérisé en ce que** l'élément de commutation est une partie d'un ou plusieurs onduleurs.

12. Procédé selon l'une des revendications 6 à 11, **caractérisé en ce que** l'élément de commutation est commandé par un ou plusieurs contrôleurs.

13. Procédé selon l'une des revendications 6 à 12, **caractérisé en ce qu'**un contrôleur principal et un microcontrôleur supplémentaire sont prévus dans le circuit de régulation du moteur, lesquels mesurent la vitesse angulaire indépendamment l'un de l'autre.

14. Dispositif de commutation de sécurité pour un moteur (9) avec une fonctionnalité de diagnostic, qui est conçu pour mettre en œuvre le procédé selon l'une des revendications 1 à 13.

15. Direction électromécanique de véhicule automobile, comprenant un servomoteur qui possède un dispositif de commutation de sécurité selon la revendication 14.

16. Système de direction à commande électrique pour un véhicule automobile, comprenant un servomoteur qui possède un dispositif de commutation de sécurité selon la revendication 14.
